(19) **Europäisches Patentamt**

**European Patent Office**

**Office européen des brevets**

(11) **EP 1 635 481 A2**

(12) **EUROPEAN PATENT APPLICATION**

(43) Date of publication:
**15.03.2006 Bulletin 2006/11**

(51) Int Cl.:
*H04B 7/06* (2006.01)  *H04L 1/06* (2006.01)

(21) Application number: **05019468.7**

(22) Date of filing: **07.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **10.09.2004 KR 2004072758**

(71) Applicant: **SAMSUNG ELECTRONICS CO., LTD.**
**Suwon-si,**
**Gyeonggi-do (KR)**

(72) Inventors:
• **Jung, Young-Ho**
  **Yeongtong-gu,**
  **Suwon-si,**
  **Gyeonggi-do (KR)**

• **Chung, Jae-Hak**
  **Yeongtong-gu,**
  **Suwon-si,**
  **Gyeonggi-do (KR)**
• **Hwang, Chan-Soo**
  **Yeongtong-gu,**
  **Suwon-si,**
  **Gyeonggi-do (KR)**
• **Nam, Seung-Hoon**
  **Yeongtong-gu,**
  **Suwon-si,**
  **Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Method of transmitting and receiving preamble sequences in an orthogonal frequency division multiplexing communication system using multiple input multiple output scheme**

(57)    A method of transmitting and receiving preamble sequences in a transmitter in an OFDM communication system is provided. A transmitter segments a first sequence of a predetermined length into a predetermined number of second sequences, generates as many preamble sequences as the second sequences by applying different time offsets to the second sequences, selects a predetermined number of preamble sequences among the generated preamble sequences, maps the selected preamble sequences to the transmit antennas, and transmits the mapped preamble sequences through the transmit antennas.

FIG.1

**Description**

The present invention relates generally to an OFDM (Orthogonal Frequency Division Multiplexing) communication system, and in particular, to a method of transmitting and receiving a preamble sequence in an OFDM communication system using a MIMO (Multiple Input Multiple Output) scheme.

Currently, a great deal of research is being conducted for providing services having different QoS (Quality of Service) at high data rates to users in a future-generation, e.g., a 4th generation (4G) communication system. More specifically, many efforts are being made to support high-speed service in order to ensure mobility and QoS to a BWA (Broadband Wireless Access) communication system such as a WLAN (Wireless Local Access Network) and a MAN (Metropolitan Area Network).

Accordingly, OFDM is being studied as a useful scheme for high-speed data transmission on wired and wireless channels in the 4G communication system. In more detail, OFDM is a transmission scheme for transmitting data on multiple carriers using MCM (MultiCarrier Modulation) in which an input serial symbol sequence is converted to parallel symbol sequences and modulated to a plurality of orthogonal subcarriers prior to transmission.

The 4G communication system requires broadband spectral resources to provide high-speed, high-quality wireless multimedia service. However, the use of the broadband spectral resources causes serious fading on a radio transmission path due to multipath propagation and frequency selective fading affects a transmission band. Therefore, the trend is that OFDM finds its applications in the 4G communication system because its robustness against frequency selective fading offers a large gain as compared to CDMA (Code Division Multiple Access).

A wireless communication system includes base stations (BSs) and mobile stations (MSs), which support the wireless communication service using frames. Therefore, a BS and an MS must acquire synchronization to each other to transmit and receive frames. For synchronization, the BS transmits a sync signal so that the MS can identify the start of a frame transmitted from the BS.

The MS then detects the frame timing of the BS by receiving the sync signal and demodulates a received frame in correspondence with the frame timing. The sync signal is usually a preamble sequence preset between the MS and the BS.

In OFDM, a preamble sequence has a low PAPR (Peak to Average Power Ratio). Using the preamble, synchronization acquisition, channel estimation, and BS identification are performed.

Because OFDM is a multicarrier communication system using multiple carriers, i.e., subcarriers, a transmission signal becomes the sum of independent signals and the maximum power of signal values differs from their average power in the time domain. As a result, PAPR increases during a data period. The linear area of an amplifier is set according to the highest PAPR of the data period in the OFDM system. As the preamble PAPR decreases, the preamble sequence can be transmitted with as much additional power as the difference between the highest PAPR of the data period and the preamble PAPR. Consequently, the performance of channel estimation, synchronization acquisition, and BS identification increases. Accordingly, lowering PAPR during a preamble period is significant.

A signal transmitted from a transmitter suffers from distortion on a radio channel and thus a receiver receives the distorted signal. The receiver acquires time/frequency synchronization for the received signal using a predetermined preamble sequence, channel-estimates the signal, and demodulates the channel-estimated signal to frequency-domain symbols through FFT (Fast Fourier Transform) processing. The receiver then decodes information data by channel decoding corresponding to channel coding used in the transmitter, and source decoding.

The OFDM communication system uses a preamble sequence for frame timing synchronization, frequency synchronization, and channel estimation. Therefore, besides the preamble, the OFDM communication system can use a guard interval and pilot subcarriers for frame timing synchronization, frequency synchronization, and channel estimation. Known symbols are transmitted as the preamble sequence at the start of each frame or data burst and time/frequency/ channel information estimated by the preamble sequence is updated based on guard intervals and pilot subcarriers in a data period.

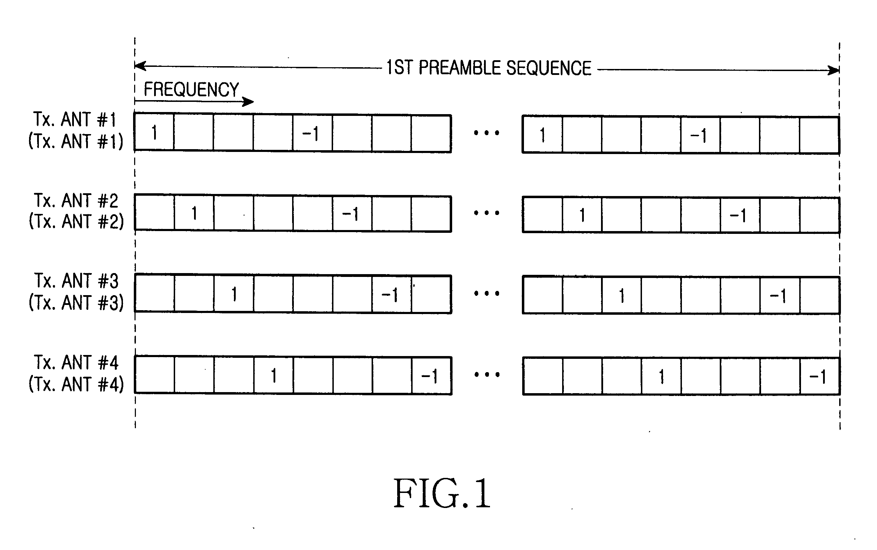

FIG 1 schematically illustrates mapping between preamble sequences and transmit (Tx) antennas in a conventional OFDM communication system using four Tx antennas. Referring to FIG. 1, the same preamble sequence (a first preamble sequence in FIG 1) is transmitted at different frequency offsets through the four Tx antennas, Tx. ANT #1 through Tx. ANT #4.

The OFDM communication system is a cellular one in which an MS must identify a plurality of cells. While one BS typically manages a plurality of cells, it is assumed to manage only one cell herein. Therefore, in order to detect a BS to which the MS belongs among a plurality of BSs, the MS must be able to identify them. Accordingly, the OFDM communication system allocates different preamble sequences to a plurality of BSs and the BSs each transmit a preamble sequence at different frequency offsets through a plurality of, i.e., $N_{TX}$, Tx antennas. Due to the use of different preamble sequences in the BSs, the MS has to detect among as many preamble sequences as the number of the BSs.

In this case, the OFDM communication system generates as many preamble sequences as the number of the BSs. As more preamble sequences of a predetermined length are generated, the highest of correlations between them and their PAPRs increase.

Because the MS needs as many correlators as the number of the BSs to identify the preamble sequences, hardware load is increased. Further, computation volume for BS identification and synchronization acquisition in correspondence with the numbers of the BSs and the Tx antennas using the correlators linearly increases.

The present invention has been made to substantially solve at least the above problems and/or disadvantages and to provide at least the advantages below. Accordingly, the object of the present invention is to provide a method of transmitting and receiving preamble sequences in an OFDM communication system using a MIMO scheme.

This object is solved by the subject matter of the independent claims.

Preferred embodiments are defined in the dependent claims.

An aspect of the present invention is to provide a method of transmitting and receiving preamble sequences having the lowest PAPRs in an OFDM communication system using a MIMO scheme.

A further aspect of the present invention is to provide a preamble sequence transmitting and receiving method for maximizing a number of BSs that can be identified in an OFDM communication system using a MIMO scheme.

Still another aspect of the present invention is to provide a preamble sequence transmitting and receiving method for enabling accurate channel estimation in an OFDM communication system using a MIMO scheme.

According to an aspect of the present invention, in a method of transmitting preamble sequences in an OFDM communication system using a plurality of transmit antennas, a transmitter segments a first sequence of a predetermined length into a predetermined number of second sequences, generates as many preamble sequences as the second sequences by applying different time offsets to the second sequences, selects a predetermined number of preamble sequences among the generated preamble sequences, maps the selected preamble sequences to the transmit antennas, and transmits the mapped preamble sequences through the transmit antennas.

According to another aspect of the present invention, in a method of allocating preamble sequences in an OFDM communication system having a plurality of BSs, each BS using a plurality of transmit antennas, a first sequence of a predetermined length is segmented into a predetermined number of second sequences, as many preamble sequences as the second sequences are generated by applying different time offsets to the second sequences, a predetermined number of preamble sequences among the generated preamble sequences is allocated to each of the BSs, and the BS is controlled to map the allocated preamble sequences to the transmit antennas of the BS and to transmit the mapped preamble sequences through the transmit antennas.

According to a further aspect of the present invention, in a method of receiving preamble sequences in an OFDM communication system where a transmitter uses a plurality of transmit antennas and a receiver uses at least one receive antenna, the receiver receives a signal, correlates the received signal with a predetermined number of preset preamble sequences, detects as many correlations as the number of the transmit antennas in a descending order, and identifies a transmitter with which the receiver communicates according to preamble sequences corresponding to the detected correlations.

The above object and other aspects, features, and advantages of the present invention will become more apparent from the following detailed description when taken in conjunction with the accompanying drawings in which:

> FIG. 1 schematically illustrates mapping between preamble sequences and Tx antennas in a conventional OFDM communication system using four Tx antennas;
> FIG. 2 is a graph illustrating an auto-correlation property of a CAZAC sequence as a preamble sequence in a MIMO-OFDM communication system according to an embodiment of the present invention;
> FIG. 3 schematically illustrates preamble sequences in a MIMO-OFDM communication system according to an embodiment of the present invention;
> FIG. 4 is a graph comparing conventional preamble sequences with preamble sequences according to the present invention in terms of performance without consideration given to PAPR; and
> FIG. 5 is a graph comparing conventional preamble sequences with preamble sequences according to the present invention in terms of performance with consideration given to PAPR.

Preferred embodiments of the present invention will be described in detail herein below with reference to the accompanying drawings. In the following description, well-known functions or constructions are not described in detail since they would obscure the invention in unnecessary detail.

The present invention provides a method of transmitting and receiving preamble sequences in an OFDM communication system. More specifically, the present invention is directed to a method of transmitting and receiving sequences having excellent auto-correlation properties, such as CAZAC (Constant Amplitude Zero Auto-Correlation) or ZAC (Zero Auto-Correlation) sequences, as preamble sequences in an OFDM communication system using a MIMO scheme, i.e., using a plurality of transmit (Tx) antennas, e.g. $N_{TX}$, and a plurality of receive (Rx) antennas, e.g., $N_{RX}$.

In the MIMO-OFDM communication system, preamble sequences are designed for use in synchronization acquisition, channel estimation, and BS identification, considering the followings:

(1) Orthogonality must be maintained between multipath components of preamble sequences transmitted from Tx antennas, in order to optimize channel estimation performance.

(2) Cross-correlations between preamble sequences allocated to BSs must be minimized to optimize the performance of BS identification.

(3) The auto-correlation property of a preamble sequence itself must be excellent in order to optimize synchronization acquisition performance.

(4) A preamble sequence must have a low PAPR. The linear area of a PA (Power Amplifier) in a transmitter is designed according to a highest PAPR of a data period. As the preamble PAPR decreases, the preamble sequence can be transmitted with as much additional power as the difference between the highest PAPR of the data period and the preamble PAPR. Accordingly, the performance of channel estimation, synchronization acquisition, and BS identification increases. Therefore, lowering PAPR during a preamble period is significant.

(5) The number of the preamble sequences used must be minimized in order to minimize computation volume in a receiver and to optimize synchronization acquisition performance.

In the present invention, a sequence having excellent auto-correlation properties is generated as a preamble sequence, taking the above-described considerations into account. Such sequences are CAZAC and ZAC sequences. The CAZAC sequence has a PAPR of 0[dB] because of its constant amplitude. The PAPR of the ZAC sequence is 3 [dB] or less. As described above, the CAZAC sequence is optimal in terms of PAPR. Therefore, generation of the CAZAC sequence as a preamble sequence will be described below, for reasons of convenience.

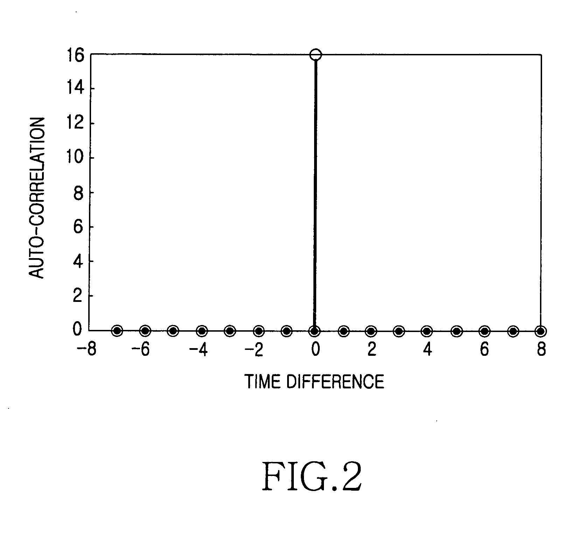

FIG. 2 is a graph illustrating a CAZAC sequence as a preamble sequence in a MIMO-OFDM communication system according to an embodiment of the present invention. Referring to FIG. 2, the horizontal axis represents a time difference of the CAZAC sequence, and the vertical axis represents an auto-correlation of the CAZAC sequence. The time difference is between a CAZAC sequence and a replica of itself. As illustrated in FIG. 2, if the time difference for the CAZAC sequence is 0, i.e., the CAZAC sequence is identical to a replica of itself with no time difference, its auto-correlation is a peak value. Consequently, without accurate synchronization, the CAZAC sequence has a zero auto-correlation and thus it demonstrates an optimal sequence detection performance.

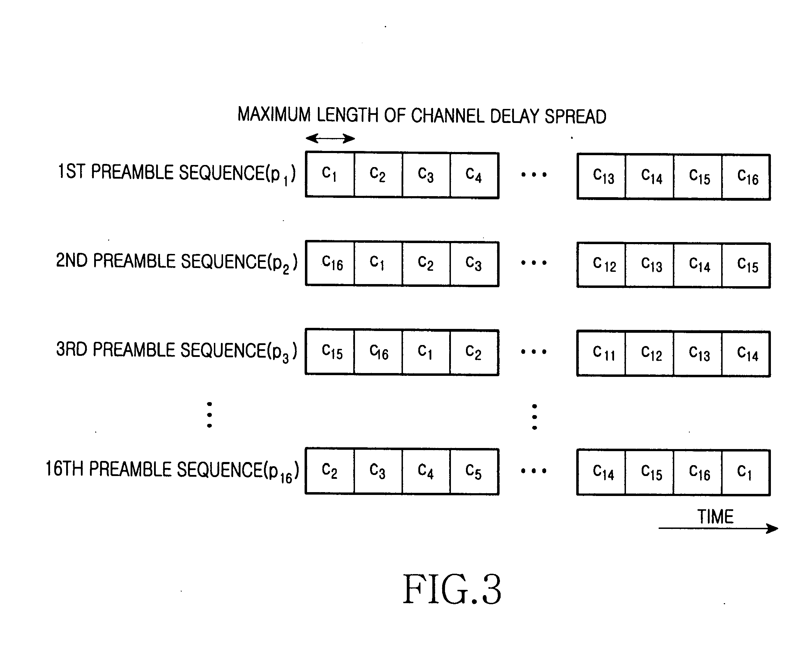

FIG. 3 schematically illustrates a preamble sequence in a MIMO-OFDM communication system according to an embodiment of the present invention. However, before describing FIG 3, a preamble sequence set includes transpose sequences cyclically shifted with different time offsets from a CAZAC sequence of length N, $c=[c_1\ c_2\ ...\ c_{N-1}\ c_N]^T$. That is, the CAZAC sequence $c=[c_1\ c_2\ ...\ c_{N-1}\ c_N]^T$ is segmented into $N_{pre}$ sub-CAZAC sequences. An $i^{th}$ sub-CAZAC sequence $C_i$ from among the $N_{pre}$ sub-CAZAC sequences is expressed as shown in Equation (1).

$$C_i = \left[ C_{\frac{(i-1)N}{N_{pre}}+1}\ C_{\frac{(i-1)N}{N_{pre}}+2}\ \cdots\ C_{\frac{iN}{N_{pre}}-1}\ C_{\frac{iN}{N_{pre}}} \right]^T$$

$$\ldots\ldots (1)$$

$N_{pre}$ preamble sequences are created by shifting the $N_{pre}$ sub-CAZAC sequences at different time offsets. In Equation (1), the An $i^{th}$ sub-CAZAC sequence $c_i$ is of length $\dfrac{N}{N_{pre}}$, equal to or greater than the maximum number of delay samples, namely, the maximum length of channel delay spread $L_{max}$ in order to prevent cross-correlation between the preamble sequences.

The $N_{pre}$ preamble sequences are expressed as shown in Equation (2):

$$P_1 = [C_1 \quad C_2 \quad C_3 \quad C_4 \quad ... \quad C_{N_{pre}-2} \quad C_{N_{pre}-1} \quad C_{N_{pre}}]^T$$

$$P_2 = [C_{N_{pre}} \quad C_1 \quad C_2 \quad C_3 \quad ... \quad C_{N_{pre}-3} \quad C_{N_{pre}-2} \quad C_{N_{pre}-1}]^T$$

$$\bullet$$
$$\bullet$$
$$\bullet$$

$$P_{N_{pre}-1} = [C_3 \quad C_4 \quad C_5 \quad C_6 \quad ... \quad C_{N_{pre}} \quad C_1 \quad C_2]^T$$

$$P_{N_{pre}} = [C_2 \quad C_3 \quad C_4 \quad C_5 \quad ... \quad C_{N_{pre}-1} \quad C_{N_{pre}} \quad C_1]^T$$

$$\ldots \ldots (2)$$

where $P_{Npre}$ is an $N_{pre}$[th] preamble sequence.

The MIMO-OFDM communication system creates the $N_{pre}$ preamble sequences. Each BS chooses n preamble sequences among them and allocates the n preamble sequences to its Tx antennas. Notably, n may be equal to or different from the number of the Tx antennas, $N_{TX}$.

When n is equal to $N_{TX}$, the n preamble sequences are mapped to the $N_{TX}$ Tx antennas in a one-to-one correspondence. For example, the preamble sequences are sequentially mapped to the Tx antennas in the order of from lowest-lowest index to highest-highest index. As another example, the preamble sequences are sequentially mapped to the Tx antennas in the order of from highest-highest index to lowest-lowest index.

When n is different from $N_{TX}$, i.e., $n=\alpha N_{TX}$ ($\alpha$ is an integer larger than 1), the n preamble sequences are mapped to the $N_{TX}$ Tx antennas in an $\alpha$:1 correspondence. For example, $\alpha$ preamble sequences are sequentially mapped to each of the Tx antennas in the order of from lowest-lowest index to highest-highest index. As another example, $\alpha$ preamble sequences are sequentially mapped to each of the Tx antennas in the order of from highest-highest index to lowest-lowest index.

Because $\alpha$ preamble sequences are allocated to each Tx antenna, the Tx antenna eventually transmits the sum of the $\alpha$ preamble sequences. Assuming that PAPR is k[dB] for one preamble sequence mapped to each transmit antenna, the PAPR of $\alpha$ preamble sequences mapped to each transmit antenna are $k+10\log_{10}\alpha$[dB]. Compared to the one preamble sequence-one transmit antenna mapping, the $\alpha$ preamble sequences-one transmit antenna causes a PAPR increase of $10\log_{10}\alpha$[dB].

When n is equal to $N_{TX}$, the n preamble sequences are mapped to the $N_{TX}$ Tx antennas in a one-to-one correspondence. For example, the preamble sequences are sequentially mapped to the Tx antennas in the order of from lowest-lowest index to highest-highest index. As another example, the preamble sequences are sequentially mapped to the Tx antennas in the order of from highest-highest index to lowest-lowest index.

When n is different from $N_{TX}$, i.e., $n=\alpha N_{TX}+\beta$ ($\beta < N_{TX}$), ($\alpha+1$) preamble sequences are allocated to each of $\beta$ Tx antennas chosen in the order of an ascending Tx antenna index, and a preamble sequences are allocated to each of the remaining Tx antennas.

Each of the BSs in the MIMO-OFDM communication system has n preamble sequences, which are different from those of any other BS, to thereby maintain orthogonality between the transmit antennas and between the BSs. Also, the use of CAZAC sequences as the preamble sequences produces excellent PAPR characteristics.

The above-described generation of the $N_{pre}$ preamble sequences will now be detailed with reference to FIG. 3.

Referring to FIG. 3, it is assumed here that $N_{pre}$=16. As illustrated in FIG. 3, the CAZAC sequence of length N, $c=[c_1 \ c_2 ... \ c_{N-1} \ c_N]^T$ is segmented into 16 sub-CAZAC sequences of length $\dfrac{N}{16}$, $C_1$ to $C_{16}$. The 16 preamble sequences $P_1$ to $P_{16}$ are created by shifting the sub-CAZAC sequences at different time offsets. As described above, the length of the sub-CAZAC sequences must be equal to or larger than the maximum channel delay spread $L_{max}$. In the illustrated case of FIG. 3, the sub-CAZAC sequence is as long as $L_{max}$.

Now, a description will be made of a method of transmitting preamble sequences in correspondence with a BS ID in a MIMO-OFDM communication system.

$N_{pre}$ preamble sequences are available in the MIMO-OFDM communication system. Each of the BSs chooses as many (n) preamble sequences as the number of its Tx antennas. The number of the Tx antennas, n is an integer that makes the number of the BSs, i.e., the number of identifiable BSs equal to or less than $_{N_{pre}}C_n$.

Because the number of the BSs is $_{N_{pre}}C_n$, each BS is allocated a combination of n preamble sequences from the $N_{pre}$ preamble sequences. Preamble sequence combinations, each having n preamble sequences can be generated using the $N_{pre}$ preamble sequences in any viable method.

Assuming that $N_{pre}=4$ and n=2, the following preamble sequence combinations, as shown in Table 1, can be created.

Table 1

| BS ID | Selected Preamble Index |
|-------|-------------------------|
| 1 | 1,2 |
| 2 | 1,3 |
| 3 | 1,4 |
| 4 | 2,3 |
| 5 | 2,4 |
| 6 | 3,4 |

Synchronization acquisition, BS identification, and channel estimation using the preamble sequences will be described below.

In the MIMO-OFDM communication system, a transmitter, e.g., BS, and a receiver, e.g., MS, use preamble sequences for synchronization acquisition, BS identification, and channel estimation. Besides the preamble sequences, the MIMO-OFDM communication system can perform the synchronization acquisition, BS identification, and channel estimation using guard intervals and pilot signals. A guard interval can be configured in the form of a "cyclic prefix" or a "cyclic postfix". The cyclic prefix is a duplicate of the last predetermined samples of a time-domain OFDM symbol and inserted in an effective OFDM symbol. The cyclic postfix is a duplicate of the first predetermined samples of a time-domain OFDM symbol and inserted in an effective OFDM symbol. The cyclic prefix and cyclic postfix are predetermined samples and have an appropriate size depending on system implementation. The repetition of the guard interval being a replica of part (first or last) of a time-domain OFDM symbol is utilized to acquire the time/frequency synchronization of a received OFDM symbol in the receiver.

The preamble sequence is a preset sequence transmitted at the start of every frame or every data burst. Synchronization information and channel information estimated using the preamble sequence is updated using guard intervals and pilot signals in a data period.

While there is no specified order in which synchronization acquisition, BS identification, and channel estimation should be performed in the MIMO-OFDM communication system, implementing them in the following order leads a maximum efficiency:

(1) Acquisition of a frequency offset and OFDM symbol synchronization using a guard interval signal;
(2) Frame synchronization acquisition using the preamble sequence;
(3) BS identification using the preamble sequence;
(4) Fine adjustment of the frequency offset using the preamble sequence (optional); and
(5) Channel estimation using the preamble sequence.

The MIMO-OFDM communication system of the present invention performs synchronization acquisition, BS identification, and channel estimation in the same manner as a conventional MIMO-OFDM communication system, except for the BS identification. According to the present invention, to identify a serving BS, the MS computes the correlations between a received signal and the $N_{pre}$ preamble sequences, selects n successive correlations in a descending order, and detects preamble sequences corresponding to the n correlations as those of the serving BS. The MS then determines a BS ID corresponding to the combination of the n preamble sequences as that of the serving BS.

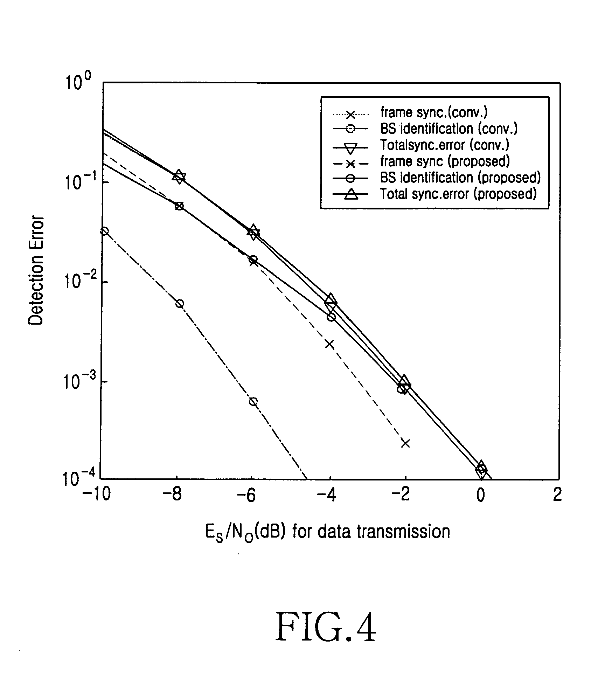

FIG. 4 is a graph illustrating comparing preamble sequences according to the present invention with conventional preamble sequences in terms of performance, without consideration given to PAPR.

Before describing FIG. 4, however, it should be noted that higher transmit power than is available in the conventional MIMO-OFDM communication system is available to the preamble sequences of the present invention because of their low PAPR. The transmit power increase results in an increase in system performance. However, in FIG. 4, the comparison is made without considerations given to PAPR.

Referring to FIG. 4, the performance comparison is made under the conditions that:

(1) Number of subchannels, N=128, is equal to the length of the CAZAC sequence.
(2) Length of a guard interval (cyclic prefix), $N_{CP}$=8.
(3) Length of the CAZAC sequence, N=128.
(4) Number of BS IDs, $N_{BS}$=120.
(5) Channel environment: ITU Veh. A channel.
(6) Number of preamble sequences, $N_{pre}$=16.
(7) Number of Tx antennas, $N_{TX}$=2.
(8) Number of preamble sequences allocated to each BS, n=2.
(9) Number of Rx antennas, $N_{RX}$=1.

If PAPR is not taken into account, both the inventive preamble sequences and the conventional preamble sequences perform well. In terms of BS identification performance, the conventional preamble sequences are excellent relative to the inventive ones. However, the conventional preamble sequences require a larger computation volume than the inventive ones, in BS identification.

Further, when the conventional MIMO-OFDM communication system fails to identify the BS, computation for the BS identification is repeated. In this context, the inventive preamble sequences have an advantage over the conventional one. The computation volume for BS identification is proportional to the number of the preamble sequences. The conventional MIMO-OFDM communication system uses ($N_{TX}N_{BS}$) preamble sequences, while the MIMO-OFDM communication system of the present invention uses only $N_{pre}$ preambles. As a result, the computation volume is reduced

to $\dfrac{N_{pre}}{N_{TX} \times N_{BS}}$. In the illustrated case of FIG. 4, $\dfrac{N_{pre}}{N_{TX} \times N_{BS}}$ is $\dfrac{1}{15}$.

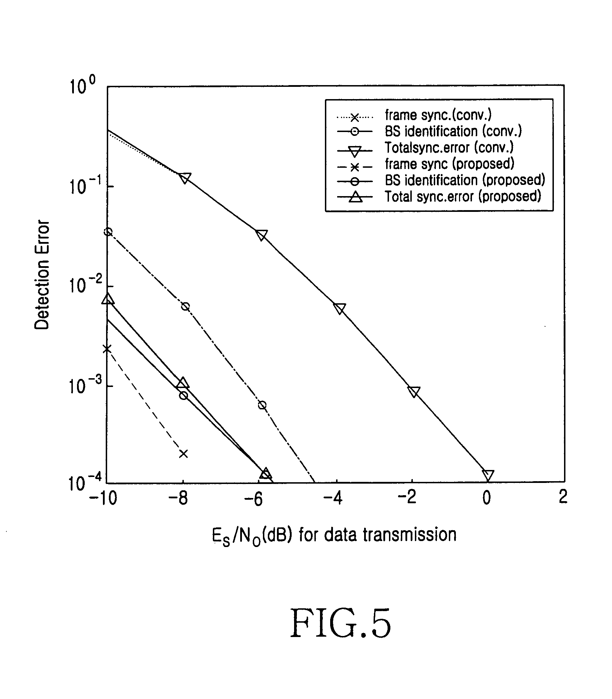

FIG. 5 is a graph illustrating comparing preamble sequences according to the present invention with conventional preamble sequences in terms of performance, with a consideration given to PAPR.

In FIG. 5, the performance comparison is made under the conditions that:

(1) Number of subchannels, N=128, is equal to the length of the CAZAC sequence.
(2) Length of a guard interval (cyclic prefix), $N_{CP}$=8.
(3) Length of the CAZAC sequence, N=128.
(4) Number of BS IDs, $N_{BS}$=120.
(5) Channel environment: ITU Veh. A channel.
(6) Number of preamble sequences, $N_{pre}$=16.
(7) Number of Tx antennas, $N_{TX}$=2.
(8) Number of preamble sequences allocated to each BS, n=2.
(9) Number of Rx antennas, $N_{RX}$=1.

Referring to FIG. 5, strong transmit power is available to the inventive preamble sequences due to their low PAPR, as compared to the conventional preamble sequences. Therefore, system performance is improved. Because PAPR is taken into account, the inventive preamble sequences perform better than the conventional preamble sequences.

In accordance with the present invention, a sufficient number of BSs can be identified, MIMO antenna channel estimation is optimized, and preamble sequences having a minimum PAPR are created in a MIMO-OFDM communication system using multiple Tx antennas. Accordingly, the total performance of the system is improved. Furthermore, because a preamble sequence is transmitted through each Tx antenna, BS identification is possible with relatively simple computation and channel estimation is accurate.

While the present invention has been shown and described with reference to certain preferred embodiments thereof, it will be understood by those skilled in the art that various changes in form and details may be made therein without departing from the scope of the present invention as defined by the appended claims.

**Claims**

1. A method of transmitting preamble sequences in a transmitter in an OFDM, Orthogonal Frequency Division Multiplexing, communication system using a plurality of transmit antennas, comprising the steps of:

   segmenting a first sequence of a predetermined length into a predetermined number of second sequences;
   generating as many preamble sequences as the second sequences by applying different time offsets to the second sequences;
   selecting a predetermined number of the generated preamble sequences;
   mapping the selected preamble sequences to the transmit antennas; and
   transmitting the mapped preamble sequences through the transmit antennas.

2. The method of claim 1, wherein the number of the selected preamble sequences is equal to the number of the transmit antennas.

3. The method of claim 2, wherein the selected preamble sequences are mapped to the transmit antennas in a one-to-one correspondence.

4. The method of claim 1, wherein the number of the selected preamble sequences exceeds the number of the transmit antennas.

5. The method of claim 4, wherein a predetermined number of preamble sequences among the selected preamble sequences are mapped to each of the transmit antennas.

6. The method of one of claims 1 to 5, wherein the first sequence is one of a CAZAC, Constant Amplitude Zero Auto-Correlation, sequence, a ZAC, Zero Auto-Correlation, sequence, and any sequence having good autocorrelation.

7. A method of allocating preamble sequences in an OFDM, Orthogonal Frequency Division Multiplexing, communication system having a plurality of base stations, BSs, each of the BSs using a plurality of transmit antennas, the method comprising the steps of:

   segmenting a first sequence of a predetermined length into a predetermined number of second sequences;
   generating as many preamble sequences as the second sequences by applying different time offsets to the second sequences;
   allocating each of the BSs a predetermined number of preamble sequences from among the generated preamble sequences;
   mapping the allocated preamble sequences to the transmit antennas of the BSs; and
   transmit the mapped preamble sequences through the transmit antennas.

8. The method of claim 7, wherein the number of the preamble sequences allocated to each of the BSs is equal to the number of the transmit antennas.

9. The method of claim 8, wherein each of the BSs maps the allocated preamble sequences to the transmit antennas in a one-to-one correspondence.

10. The method of claim 7, wherein the number of the preamble sequences allocated to each of the BSs exceeds the number of the transmit antennas.

11. The method of claim 10, wherein each of the BSs maps a predetermined number of preamble sequences from among the allocated preamble sequences to each of the transmit antennas.

12. The method of one of claims 7 to 11, wherein the first sequence is one of a CAZAC, Constant Amplitude Zero Auto-Correlation, sequence, a ZAC, Zero Auto-Correlation, sequence and any sequence having good autocorrelation.

13. A method of receiving preamble sequences in a receiver in an OFDM, Orthogonal Frequency Division Multiplexing, communication system in which a transmitter uses a plurality of transmit antennas and the receiver uses at least one receive antenna, comprising the steps of:

receiving a signal;
correlating the received signal with a predetermined number of preset preamble sequences;
detecting as many correlations as a number of the transmit antennas in a descending order; and
identifying a transmitter with which the receiver communicates according to preamble sequences corresponding
to the detected correlations.

14. The method of claim 13, wherein the preamble sequences are produced by segmenting a first sequence of a predetermined length into a predetermined number of second sequences and applying different time offsets to the second sequences, the number of the preamble sequences being equal to the number of the second sequences.

15. The method of claim 13 or 14, wherein the first sequence is one of a CAZAC, Constant Amplitude Zero Auto-Correlation, sequence, a ZAC, Zero Auto-Correlation, sequence, and any sequence having good autocorrelation.

FIG.1

FIG.2

MAXIMUM LENGTH OF CHANNEL DELAY SPREAD

1ST PREAMBLE SEQUENCE($p_1$) | $c_1$ | $c_2$ | $c_3$ | $c_4$ | · · · | $c_{13}$ | $c_{14}$ | $c_{15}$ | $c_{16}$

2ND PREAMBLE SEQUENCE($p_2$) | $c_{16}$ | $c_1$ | $c_2$ | $c_3$ | · · · | $c_{12}$ | $c_{13}$ | $c_{14}$ | $c_{15}$

3RD PREAMBLE SEQUENCE($p_3$) | $c_{15}$ | $c_{16}$ | $c_1$ | $c_2$ | · · · | $c_{11}$ | $c_{12}$ | $c_{13}$ | $c_{14}$

16TH PREAMBLE SEQUENCE($p_{16}$) | $c_2$ | $c_3$ | $c_4$ | $c_5$ | · · · | $c_{14}$ | $c_{15}$ | $c_{16}$ | $c_1$

TIME

FIG.3

EP 1 635 481 A2

FIG.4

FIG.5